# EUROPÄISCHE PATENTANMELDUNG

(11) **EP 1 319 813 A2**
(43) Veröffentlichungstag der Anmeldung: **18.06.2003**
(21) Anmeldenummer: 02024333.3
(22) Anmeldetag: 02.11.2002
(51) Int. Cl.: F01N 3/08, F01N 3/20, F02B 69/02, F02B 43/10

(54) **Verfahren zur katalytischen Abgasnachbehandlung von motorischen Verbrennungsabgasen**

(30) Priorität: 15.12.2001 DE 10161696
(71) Anmelder: Bayerische Motoren Werke Aktiengesellschaft, 80809 München (DE)
(72) Erfinder: Preis, Michael, 86343 Königsbrunn (DE); Fickel, Hans, 85368 Moosburg (DE); Ringler, Jürgen, 86438 Kissing (DE)

(57) **Zusammenfassung**

Zur Regeneration eines NOₓ-Speicherkatalysators (18) mittels Wasserstoff in einem Sekundärwasserstoffprozeß wird der zur Regeneration benötigte Wasserstoff einem Primärwasserstoffprozeß entnommen wobei bei einem Kraftfahrzeug, dessen Brennkraftmaschine (14) in diesem Primärwasserstoffprozeß mittels Wasserstoff betreibbar ist, dem der Brennkraftmaschine (14) zugeführten Wasserstoffstrom eine Teilmenge entnommen und dem Abgasstrom stromaufwärts des Noₓ-Speicherkatalysators (18) zugeführt wird.

## Beschreibung

Die Erfindung betrifft gemäß dem Oberbegriff des Patentanspruchs 1 ein Verfahren zur katalytischen Abgasnachbehandlung von motorischen Verbrennungsabgasen mittels eines NOₓ-Speicherkatalysators, welcher regenerierbar ist, indem dem Abgas stromaufwärts des NOₓ-Speicherkatalysators Wasserstoff zugeführt wird.

Bei mager betriebene Verbrennungsmotoren, insbesondere bei direkteinspritzenden Otto-Motoren, Dieselmotoren oder Wasserstoffmotoren, welche in großen Bereichen des Kennfeldes mit überstöchiometrischem Luftverhältnis betrieben werden, ist es notwendig, Stickoxide zu reduzieren. Zu diesem Zweck sind neben kontinuierlich arbeitenden System intermittierend arbeitende NOₓ-Speicherkatalysatoren bekannt geworden, welche bei überstöchiometrischem Betrieb der Brennkraftmaschine NOₓ zwischenzuspeichern und in kürzeren unterstöchiometrischen Betriebsphasen wieder entladbar sind. Beispielsweise wird ein platinhaltiger Adsorber verwendet, welcher NO mit Hilfe von Sauerstoff zunächst zu NO₂ oxidiert, im nachfolgenden Speicherschritt greift das sauere NO₂ dann ein Metalloxid an und formt dabei das dazugehörige Nitrat. Als Speichermaterial kommen dabei besonders Alkali- und Erdalkalimetalle in Betracht (z. B. Barium), die aufgrund ihrer basischen Eigenschaften imstande sind, in dem vorgegebenen Temperaturbereich hinreichend stabile Nitrate zu bilden. Ist der Vorrat an Speicher-Oxiden aufgebraucht, muss der Motor kurzzeitig mit fettem Gemisch betrieben werden, um den Speicher zu regenerieren. Dabei brechen die im fetten Gemisch vorhandenen Reduktionsmittel die Nitrate auf und es entsteht NO sowie das ursprüngliche Metalloxid.

Als sehr nachteilig bei der Umsetzung dieses Konzeptes hat sich insbesondere der für die Regeneration des NOₓ-Adsorbers erforderliche Wechsel von Mager- auf Fettbetrieb erwiesen. Zu nennen sind hier neben dem sehr hohen Regelungsaufwand die Gefahr von HC- und CO-Schlupf sowie Partikel-/Rußemission.

Abhilfe haben Verfahren geschaffen, welche eine Regeneration des NOₓ-Speicherkatalysators bewirken, indem dem Rohabgas stromaufwärts des NOₓ-Speicherkatalysators Wasserstoff zugeführt wird. Ein derartiges Verfahren und eine Vorrichtung zur Abgasnachbehandlung insbesondere für Magermotoren in Kraftfahrzeugen, z.B. direkteinspritzenden Dieselmotoren und Benzinmotoren sowie die Erhaltung der Funktionsfähigkeit von NOₓ-Speicherkatalysatoren in Benzin- und Dieselmotoren und Partikelfiltern in Dieselmotoren beschreibt die DE 199 39 807 A1. Zur Regeneration des NOₓ-Speicherkatalysators wird intermittierend etwa einmal pro Minute dem Rohabgas Wasserstoff zugegeben, um eine Reduktion der Stickoxide zu bewirken. Gemäß der DE 199 39 807 A1 ist zur Gewinnung des Wasserstoffes on board eine aufwändige Hydrolyseeinheit vorgesehen, welche neben dem eigentlichen Elektrolyseur ein Wasserreservoir, eine Dosiereinrichtung, ein Wasserstoffreservoir zur Zwischenspeicherung sowie ein Rohrleitungssystem umfasst.

Sehr nachteilig und aufwändig ist hierbei, dass ausschließlich zur Regeneration des NOₓ-Speicherkatalysators ein eigener Wasserstoffprozess umfassend die zugehörigen verfahrenstechnischen Einrichtungen notwendig ist. Der zur Regeneration des NOₓ-Speicherkatalysators verwendete Wasserstoff muss jeweils alleine zum Zwecke der Katalysatorregenerierung bereitgestellt und ggf. in einem Wasserstoffreservoir zwischengespeichert werden; das Wasserreservoir muss regelmäßig nachgefüllt werden.

Als Aufgabe stellt sich daher die Bereitstellung eines Verfahrens unter Vermeidung der genannten Nachteile.

Die Lösung der Aufgabe wird erfindungsgemäß mit dem Einsatz eines Verfahrens erreicht, welches durch die Merkmale des Patentanspruches 1 gekennzeichnet ist, wobei der zugrundeliegende Gedanke die Entnahme des in einem Sekundärprozess zur Regeneration des NOₓ-Speicherkatalysators verwendeten Wasserstoffes aus einem Primärwasserstoffprozess umfasst.

Im Rahmen der vorliegenden Erfindung ist unter dem Begriff Wasserstoff insbesondere auch ein wasserstoffreiches Synthesegas zu verstehen.

Bevorzugte Ausführungsbeispiele der Erfindung sind Gegenstand der Unteransprüche.

Bei einem Kraftfahrzeug, dessen Brennkraftmaschine mittels Wasserstoff betreibbar ist, ist es sehr zweckmäßig, wenn dem der Brennkraftmaschine zugeführten Wasserstorfstrom eine Teilmenge entnommen und dem Abgasstrom stromaufwärts des NOₓ-Speicherkatalysators zugeführt wird. Je nach Ausgestaltung der Abgasnachbehandlungseinrichtung erfolgt die Zuführung des Wasserstoffs zum Abgasstrom diskret oder kontinuierlich.

Bei einem Kraftfahrzeug, dessen Brennkraftmaschine mittels Kohlenwasserstoff betreibbar ist und bei welchem in einem Primärwasserstoffprozess mittels eines Reformers Wasserstoff zum Betrieb insbesondere einer Brennstoffzelle erzeugt wird, ist es sehr vorteilhaft, wenn entsprechend der Ausgestaltung der Abgasreinigungseinrichtung diskret oder kontinuierlich eine Teilmenge dem Primärwasserstoffprozess entnommen und dem Abgasstrom stromaufwärts des NOₓ-Speicherkatalysators zugeführt wird.

Weitere zweckmäßige Ausgestaltungen der Erfindung sind mit den Unteransprüchen 4 bis 6 beschrieben.

Nachfolgend werden Ausführungsbeispiele der Erfindung unter Bezugnahme auf Figuren näher beschrieben, dabei zeigen schematisch und beispielhaft
- Fig. 1: die Regeneration eines ein Adsorberteil umfassenden NOₓ-Speicherkatalysators bei einem Kraftfahrzeug, dessen Brennkraftmaschine mittels Wasserstoff betreibbar ist,
- Fig. 2: die Regeneration eines zwei parallel angeordnete Adsorberteile umfassenden NOₓ-Speicherkatalysators bei einem Kraftfahrzeug, dessen Brennkraftmaschine mittels Wasserstoff betreibbar ist,
- Fig. 3: die in einem Reformersystem ablaufenden Reaktionsprozesse,
- Fig. 4: die Regeneration eines NOₓ-Speicherkatalysators mittels Wasserstoff bei einem Kraftfahrzeug, welches einen Reformer umfasst sowie
- Fig. 5: die Regeneration eines NOₓ-Speicherkatalysators bei einem Kraftfahrzeug, welches einen in dem Abgasstrang integrierten Reformer umfasst.

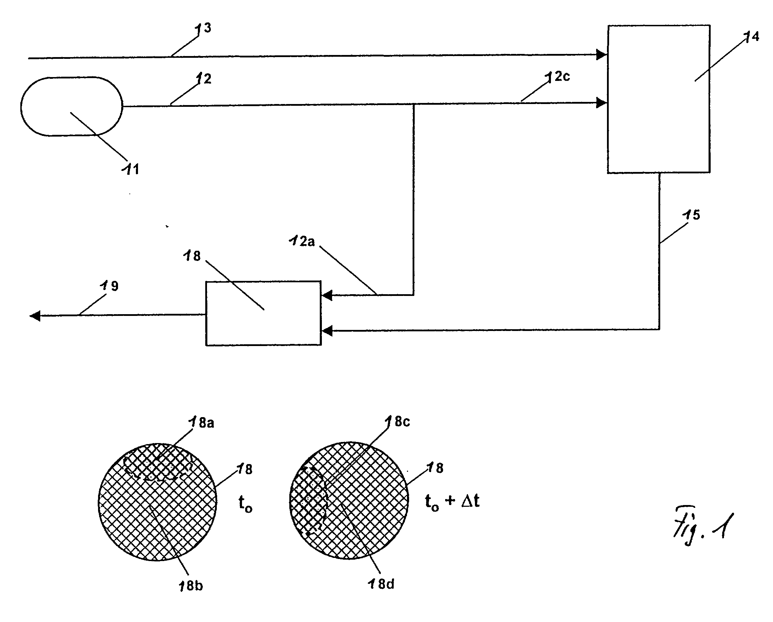

Fig. 1 beschreibt die Regeneration eines NOₓ-Speicherkatalysators bei einem Kraftfahrzeug, dessen Brennkraftmaschine mittels Wasserstoff - entsprechend einem Primärwasserstoffprozeß - betreibbar ist. Zur Speicherung des Kraftstoffes ist ein isolierter Tank 11 vorgesehen, in welchen kryogener Wasserstoff in flüssigem Zustand bei ca. -260°C gespeichert ist. Durch Leitungen 12, 12c gelangt der Wasserstoff zur Brennkraftmaschine 14 und wird dort mittels durch die Leitung 13 zugeführter Luft umgesetzt. Die im Magerbetrieb bei überstöchiometrischer Verbrennung im Abgas 15 enthaltenen Stickoxide werden einem NOₓ-Speicherkatalysator 18 zugeführt, im weiteren Verlauf wird das gereinigte Abgas über eine Leitung 19 abgeführt.

Ein Teil des durch die Leitung 12 der Brennkraftmaschine 14 zugeführten Wasserstoffes wird in einer Leitung 12a abgezweigt und dem Abgasstrom oberhalb des NOₓ-Speicherkatalysators 18 einem Sekundärwasserstoffprozeß zum Zwecke der Speicherregenerierung zugeführt. Der Wasserstoff ist im Tank 11 in flüssigem Zustand gespeichert, während er im Katalysator gasförmig reagiert. Für den Fall, dass der Wasserstoff in flüssigem Zustand durch zweckmäßigerweise isolierte Leitungen 12, 12c der Brennkraftmaschine 14 zugeführt wird, ist es vorteilhaft, wenn der abgezweigte Wasserstoff in der Leitung 12a bereits verdampft wird, so dass er in gasförmigen Zustand dem Abgasstrom 15 oberhalb des Katalysators 18 zugegeben wird. Die Verdampfung des Wasserstoffes kann sehr zweckmäßig dadurch erzielt werden, dass über den Weg der Leitung 12a diese mit einer anderen - ein wärmeres Medium führenden - Leitung in wärmetauschendem Kontakt steht, und so eine Erwärmung des die Leitung 12a durchströmenden Wasserstoffes erreicht wird. Beispielsweise verläuft die Leitung 12a spiralförmig um eine andere Leitung oder wird von einer anderen Leitung spiralförmig umgeben; auch eine Ausgestaltung mit Kühlrippen zur Aufwärmung des Wasserstoffes mittels Luft ist zweckmäßig.

Im Adsorptionsbetrieb reinigt der NOₓ-Speicherkatalysator das Abgas von Stickoxiden, indem zunächst NO mit Hilfe von Sauerstoff am Platin des Katalysators zu NO₂ oxidiert wird und darauffolgend das sauere NO₂ entsprechend einer Speicherung ein Metalloxid unter Bildung des dazugehörigen Nitrates angreift. Mit zunehmender Beladung des NOₓ-Speicherkatalysators wird der Vorrat an Speicher-Oxiden aufgebracht, so dass deren Regeneration erforderlich ist. Vorliegend wird dies mittels des zugeführten Wasserstoffes erreicht, wobei Wasserstoff und gespeicherte Stickoxide gemäß nachstehender Gleichung zu Stickstoff und Wasser reagieren:

H₂ + 1/x NO_{x ads} => ½ x N₂ + H₂O (1)

Dabei erfolgt zweckmäßigerweise eine Regelung der Wasserstoffzugabe dahingehend, dass eine Regeneration abhängig vom Beladungszustand des Katalysators stattfindet. Eine hohe Beladung des NOₓ-Speicherkatalysators bedingt eine hohe Wasserstoffzugabe zum Rohabgas, bei abnehmender Beladung wird die Wasserstoffzugabe entsprechend diskret oder kontinuierlich verringert und umgekehrt.

Mit der Fig. 1 ist ein Ausführungsbeispiel dargestellt, bei welchem der NOₓ-Speicherkatalysator ein Adsorberteil 18 umfasst, welches bereichsweise wechselnd im Adsorptions- bzw. Desorptionsbetrieb betreibbar ist. Hierzu wird der Wasserstoff - bevorzugterweise kontinuierlich - derart dem Abgasstrom oberhalb des NOₓ-Speicherkatalysators 18 zugeführt, dass zeitlich aufeinanderfolgend wechselnde Bereiche mit Wasserstoff beaufschlagt werden und entsprechend durch eine Regeneration dieser Bereiche sukzessive einer Regeneration des gesamten Speicherkatalysators 18 stattfindet. Beispielsweise wird zu einem Zeitpunkt t₀ ein Bereich 18a und zu einem Zeitpunkt (t₀ + Δt) ein Bereich 18c mit Wasserstoff beaufschlagt, während der Bereich 18b, 18d zum entsprechenden Zeitpunkt weiterhin NOₓ adsorbiert. Zur Beaufschlagung von Teilbereichen 18a, 18c des Querschnittes 18 mit Wasserstoff wird beispielsweise eine relativ zum Katalysatorkörper drehbares Abdeckelement verwendet, welche den kreisförmigen in Sektoren unterteilt und mittels dem der zugegebene Wasserstoff auf bestimmte Bereiche lenkbar ist. Gemäß eines anderen Ausführungsbeispieles ist die Düse zur Einbringung des Wasserstoffes bewegbar, so dass eine gezielt gerichtete Einbringung erfolgt.

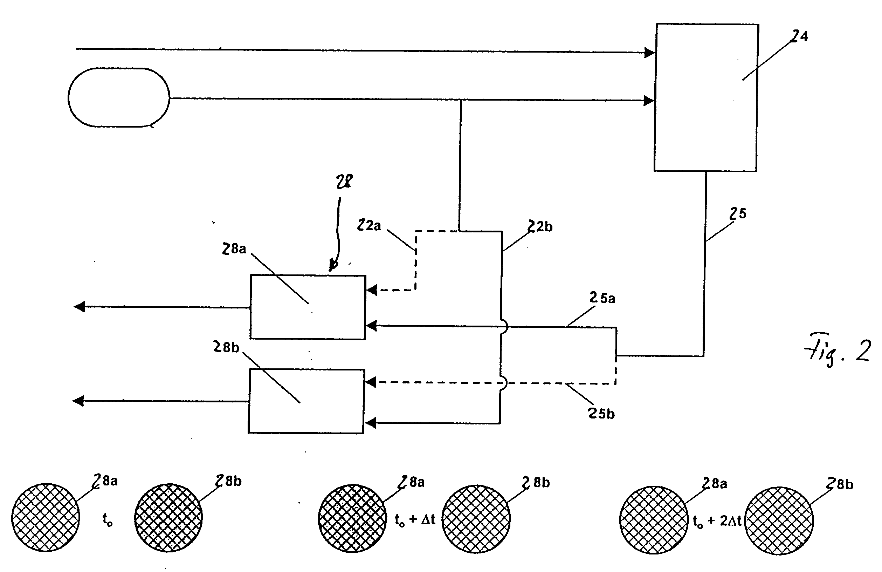

Eine alternative Ausgestaltung, umfassend einen zwei parallel angeordnete Adsorberteile 28a, 28b umfassenden NOₓ-Speicherkatalysator zeigt Fig. 2. Der durch die Leitung 25 von der Brennkraftmaschine 24 abgeführte, Stickoxide enthaltende Abgasstrom ist durch die Leitungen 25a, 25b durch den Adsorberteil 28a und/oder durch den Adsorberteil 28b leitbar; durch die Leitungen 22a, 22b ist dem Abgasstrom oberhalb des Katalysators 28 Wasserstoff zuführbar.

Durch einen zeitlich aufeinanderfolgenden wechselnden Betrieb der Adsorberteile 28a, 28b im Adsorptions- bzw. Desorptionsbetrieb kann jeweils eine Regeneration eines Adsorberteiles erfolgen, während das andere weiterhin zur Abgasreinigung zur Verfügung steht. So wird zum Zeitpunkt t₀ der Adsorberteil 28b mittels Zugabe von Wasserstoff über die als durchgezogene Linie dargestellte Leitung 22b zum Rohabgas regeneriert, während der Adsorberteil 28a weiterhin Stickoxide aus dem über die als durchgezogene Linie dargestellte Leitung 25a zugeführten Abgas adsorbiert. Zu einem darauffolgenden Zeitpunkt t₀ + Δt wird der Adsorberteil 28a mittels Wasserstoff über die gestrichelt dargestellte Leitung 22a beaufschlagt, so dass dessen Regeneration erfolgt, während der Adsorberteil 28b Stickoxide aus dem Abgas adsorbiert. Nachfolgend sind zu einem Zeitpunkt t₀ + 2 Δt beide Adsorberteile 28a, 28b regeneriert und stehen zur Abgasreinigung zur Verfügung.

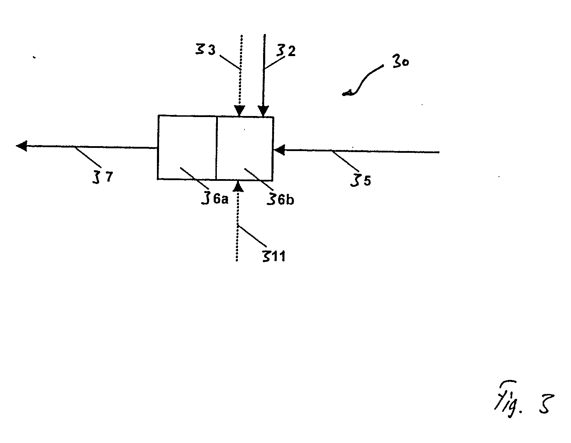

Sehr zweckmäßig ist es weiterhin, das erfindungsgemäße Verfahren bei einem Kraftfahrzeug anzuwenden, welches in einem Primärwasserstoffprozeß eine Brennstoffzelle umfasst und welches zu deren Versorgung mit Wasserstoff einen Reformer, wie beispielhaft mit Fig. 3 gezeigt, umfasst. Zweckmäßigerweise ist die Brennkraftmaschine des Kraftfahrzeuges mittels Kohlenwasserstoff betrieben, welcher ebenfalls dem Reformer zur Herstellung eines wasserstoffreichen Synthesegases zur Verfügung steht. Entsprechend der jeweiligen Reformierungsart wird im Reformer 30 in einer Reaktionszone 36b kohlenwasserstoffhaltiger Kraftstoff 32 unter Zugabe von Luft 33 und/oder Wasser 311 zu einem überwiegend aus H₂, CO und N₂ bestehenden Reformat umgesetzt.

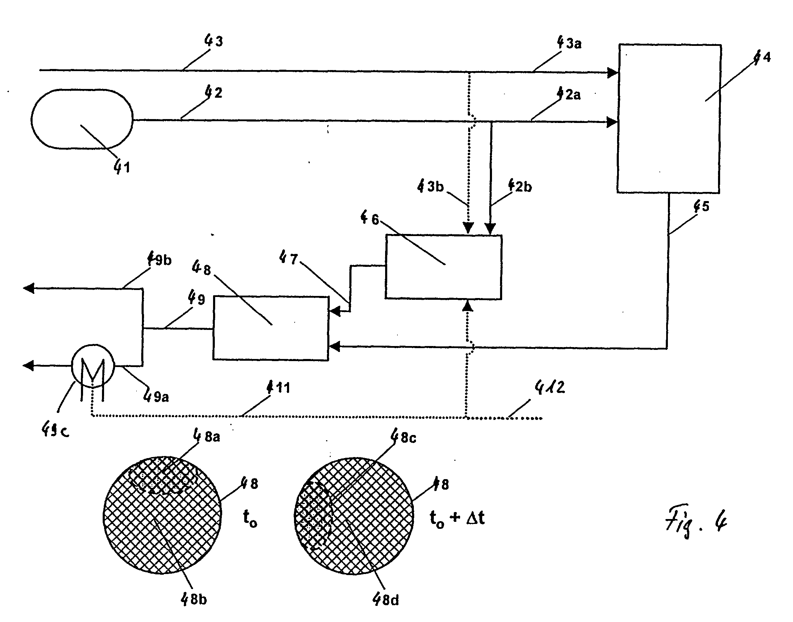

Ein Abgasreinigungseinrichtung eines derartigen Kraftfahrzeuges zeigt Figur 4. In einem Tank 41 ist kohlenwasserstoffhaltiger Kraftstoff wie Benzin oder Diesel gespeichert, welcher über Leitungen 42, 42a einer Brennkraftmaschine 44 zugeführt wird. Das bei der Verbrennung mit über die Leitungen 43, 43a zugeführter Luft entstehende, im Magerbetrieb Stickoxide enthaltene Abgas wird zur Reinigung über die Leitung 45 einem NOₓ-Speicherkatalysator 48 zugeführt, welcher regeneriert wird, indem wechselnd Bereiche 48a, 48c mit Wasserstoff beaufschlagt werden, wobei Bereiche 48b, 48d weiterhin zur Abgasreinigung zur Verfügung stehen. Adsorptions- und Desorptionsvorgang entsprechen dabei dem mit Figur 1 beschriebenen.

Der in einem Sekundärwasserstoffprozeß zur Regeneration des NOₓ-Speicherkatalysators 48 gemäß Gleichung (1) benötigte Wasserstoff wird von dem einer in dieser Darstellung nicht gezeigten Brennstoffzelle zur Verfügung stehenden Reformat abgezweigt. Zur Wasserstoffreformierung werden dem Reformer 46 kohlenwasserstoffhaltiger Kraftstoff über die Leitung 42b sowie über die Leitungen 43b, 411, 412 Luft und/oder Wasser zugeführt, über die Leitung 47 wird dem Abgasstrom oberhalb des NOₓ-Speicherkatalysators 48 das Reformat zur Regeneration beigegeben. Das gereinigte Abgas wird über eine Leitung 49, 49b abgeführt, wobei es sehr zweckmäßig ist, wenn zumindest ein Teilstrom über ein Leitung 49a zum Zwecke der Wasserrückgewinnung durch einen Kondensator 49c geleitet wird. Auch in diesem Ausführungsbeispiel kann selbstverständlich - wie bereits mit Figur 2 gezeigt und beschrieben - ein NOₓ-Speicherkatalysator 48 mit zwei Adsorberteilen zur Anwendung kommen.

## Patentansprüche

1. Verfahren zur katalytischen Abgasnachbehandlung von motorischen Verbrennungsabgasen mittels eines NOₓ-Speicherkatalysators, welcher regenerierbar ist, indem dem Abgas stromaufwärts des NOₓ-Speicherkatalysators Wasserstoff zuführbar ist, **dadurch gekennzeichnet, dass** der in einem Sekundärprozeß zur Regeneration/Desorption des NOₓ-Speicherkatalysators/Adsorberkatalysators (18, 28, 48, ) verwendete Wasserstoff einem Primärwasserstoffprozeß entnommen wird.

2. Verfahren nach Anspruch 1, **dadurch gekennzeichnet, dass** bei einem Kraftfahrzeug, dessen Brennkraftmaschine (14, 24) in einem Primärwasserstoffprozeß mittels Wasserstoff betreibbar ist, dem der Brennkraftmaschine (14, 24) zugeführten Wasserstoffstrom eine Teilmenge entnommen und dem Abgasstrom stromaufwärts des NOₓ-Speicherkatalysators (18, 28) zugeführt wird.

3. Verfahren nach Anspruch 1, **dadurch gekennzeichnet, dass** bei einem Kraftfahrzeug, dessen Brennkraftmaschine (44, ) mittels Kohlenwasserstoff betreibbar ist und bei welchem mittels eines Reformers (46, ) aus Kohlenwasserstoff Wasserstoff zum Betrieb insbesondere einer Brennstoffzelle in einem Primärwasserstoffprozeß erzeugt wird, eine Teilmenge entnommen und dem Abgasstrom stromaufwärts des NOₓ-Speicherkatalysators (48, ) zugeführt wird.

4. Verfahren nach einem der vorhergehenden Ansprüche, **dadurch gekennzeichnet, dass** stromabwärts des NOₓ-Speicherkatalysators (18, 28, 48, ) im Abgas enthaltener Wasserdampf auskondensiert und einem Wasserstoffprozeß zugeführt wird.

5. Verfahren nach einem der vorhergehenden Ansprüche, **dadurch gekennzeichnet, dass** der NOₓ-Speicherkatalysator (28) zwei parallel angeordnete Adsorberteile (28a, 28b) umfasst, welche zeitlich aufeinanderfolgend wechselseitig im Adsorptions- bzw. Desorptionsbetrieb durchströmbar sind.

6. Verfahren nach einem der vorhergehenden Ansprüche, **dadurch gekennzeichnet, dass** der NOₓ-Speicherkatalysator (18) ein Adsorberteil umfasst, welches zeitlich aufeinanderfolgend bereichsweise (18a, 18c) regenerierbar ist.
